(19) Europäisches Patentamt
European Patent Office
Office européen des brevets

(11) Veröffentlichungsnummer : **0 126 378**
**B1**

(12) # EUROPÄISCHE PATENTSCHRIFT

(45) Veröffentlichungstag der Patentschrift : **09.07.86**

(51) Int. Cl.⁴ : **C 09 B 51/00**, D 06 P 3/32

(21) Anmeldenummer : **84105233.5**

(22) Anmeldetag : **09.05.84**

(54) **Verfahren zur Herstellung von sauren Nitrofarbstoffen.**

(30) Priorität : **13.05.83 DE 3317471**

(43) Veröffentlichungstag der Anmeldung : **28.11.84 Patentblatt 84/48**

(45) Bekanntmachung des Hinweises auf die Patenterteilung : **09.07.86 Patentblatt 86/28**

(84) Benannte Vertragsstaaten : **BE CH DE FR GB IT LI**

(56) Entgegenhaltungen : **FR-A- 2 282 456**

(73) Patentinhaber : **HOECHST AKTIENGESELLSCHAFT**
**Postfach 80 03 20**
**D-6230 Frankfurt am Main 80 (DE)**

(72) Erfinder : **Hertel, Hasso, Dr.**
**Brunnenweg 10**
**D-6052 Mühlheim/Main (DE)**

**EP 0 126 378 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

In der Deutschen Offenlegungsschrift Nr. 25 15 997 sind Farbstoffe beschrieben, die durch Behandlung von Aminonitrodiphenylaminsulfonsäuren mit Braunstein bei einem pH-Wert über 6 und erhöhter Temperatur erhalten wurden. Sie dienen zum Färben von Leder.

Für das färberische Verhalten von Leder ist die Art seiner Gerbung von ausschlaggebender Bedeutung. Die wichtigste Gerbung ist heute die Gerbung mit Chromsalzen — werden doch nach Literaturangaben (bspw. Ullmanns Encyklopädie der technischen Chemie, 4. Auflage, Band 16, S. 120) etwa 80 % des insgesamt hergestellten Leders zumindest anteilig chromgegerbt.

Die Farbstoffe der genannten Deutschen Offenlegungsschrift 25 15 997 geben auf zwischengetrocknetem Chromspaltleder oder auch auf zwischengetrocknetem nachchromiertem vegetabilisch gegerbten Leder Färbungen in vollen Tönen. Auf frischem Chromleder, wie z. B. Boxcalf, können dagegen nur sehr helle Färbungen erhalten werden. Diese in der Praxis sehr wichtige Lederart läßt sich demzufolge mit den erwähnten Farbstoffen nicht zufriedenstellend färben.

Es wurde nun gefunden, daß man saure Nitrofarbstoffe mit verbessertem Färbevermögen erhält, wenn man die Behandlung der Aminonitrodiphenylaminosulfonsäuren mit Mangan-(VI)- oder Mangan-(VII)-Verbindungen anstelle von Braunstein vornimmt. Mit solchen Farbstoffen lassen sich auch auf frischen Chromnarbenledern volle Töne färben.

Die vorliegende Erfindung betrifft somit ein Verfahren zur Herstellung von sauren Nitrofarbstoffen durch Behandlung von Aminonitrodiphenylaminsulfonsäuren mit einem Oxidationsmittel in wäßrigem Medium, das dadurch gekennzeichnet ist, daß man als Oxidationsmittel eine Mangan-(VI)- oder Mangan-(VII)-Verbindung einsetzt und die Farbstoffbildung bei einem pH-Wert von oberhalb 5 und bei einer Temperatur zwischen 20 und 100 °C durchführt.

Das erfindungsgemäße Verfahren wird vorzugsweise bei einem pH-Wert zwischen 6,5 und 10,5 und vorzugsweise bei einer Temperatur zwischen 50 und 80 °C durchgeführt. Bevorzugt wird die erfindungsgemäß eingesetzte Mangan-(VI)- oder Mangan-(VII)-Verbindung in einer Menge von 0,2 bis 2 Mol pro Mol Aminonitrodiphenylaminsulfonsäure eingesetzt.

Die als Ausgangsverbindungen dienenden Aminonitrodiphenylaminsulfonsäuren können in den aromatischen Kernen weitere Substituenten, die für solche Verbindungen zur Herstellung von sauren Nitrofarbstoffen üblich sind, enthalten ; solche Substituenten sind vorzugsweise Halogenatome, wie Chlor- und Bromatome, Alkylgruppen, insbesondere von 1 bis 4 C-Atomen, Alkoxygruppen, insbesondere von 1 bis 4 C-Atomen, und Carboxygruppen.

In der Regel wird das erfindungsgemäße Verfahren in der Weise durchgeführt, daß man zu einer wäßrigen Lösung von einem pH-Wert über 5, vorzugsweise zwischen 6, 5 und 10,5, und einer Temperatur zwischen 20 und 100 °C, vorzugsweise zwischen 50 und 80 °C, mit einer oder mehreren Ausgangs-Aminonitrodiphenylaminsulfonsäuren eine oder mehrere der Manganverbindungen, die erfindungsgemäß als Oxidationsmittel dienen, zugibt und den Reaktionsansatz einige Stunden bei erhöhter Temperatur, wie bei einer Temperatur zwischen 50 und 100 °C, vorzugsweise zwischen 50 und 80 °C, unter Einhaltung des angegebenen und gewählten pH-Bereiches, beispielsweise durch Zugabe einer Säure, erwärmt. Nach beendeter Reaktion wird das gebildete Farbstoffgemisch durch Sprühtrocknung oder durch Aussalzen und Absaugen isoliert, wobei im letztgenannten Falle die erforderliche Trocknung beispielsweise in einem Warmluftstrom erfolgen kann.

Mangan-(VI)- und Mangan-(VII)-Verbindungen, die als Oxidationsmittel erfindungsgemäß verwendet werden, sind vorzugsweise die Alkali- und Erdalkalimetallsalze, wie insbesondere Natrium-, Kalium- und Calciumsalze, der Mangansäure und der Manganpersäure. Vorzugsweise werden erfindungsgemäß als Oxidationsmittel Kaliummanganat, Natriummanganat und Natriumpermanganat sowie insbesondere Kaliumpermanganat verwendet.

Aminonitrodiphenylaminsulfonsäuren, die als Ausgangsverbindungen zur Herstellung der sauren Nitrofarbstoffe dienen, sind beispielsweise 4-Amino-4′-nitro-diphenylamin-2′-sulfonsäure, 4-Amino-2′-nitro-diphenylamin-4′-sulfonsäure, 4-Amino-2′,4′-dinitro-diphenylamin-6′-sulfonsäure, 4-Amino-2′,6′-dinitro-diphenylamin-4′-sulfonsäure, 3-Amino-4′-nitro-diphenylamin-2′-sulfonsäure sowie diese in einem oder beiden Benzolkernen durch einen oder zwei, bevorzugt einen, Substituenten substituierten Verbindungen, wobei diese Substituenten aus der Gruppe von Halogenatomen, wie Chlor- oder Bromatomen, Alkylgruppen von vorzugsweise 1 bis 4 C-Atomen, Alkoxygruppen von vorzugsweise 1 bis 4 Kohlenstoffatomen und Carboxygruppen ausgewählt sind, so beispielsweise 5-Chlor-4-amino-4′-nitro-diphenylamin-2′-sulfonsäure, 5-Chlor-4-amino-2′-nitro-diphenylamin-4′-sulfonsäure, 4-Amino-3-methyl-4′-nitro-diphenylamin-2′-sulfonsäure, 4-Amino-3-methyl-2′-nitro-diphenylamin-4′-sulfonsäure, 4-Amino-3-methoxy-4′-nitro-diphenylamin-2′-sulfonsäure, 4-Amino-3-methoxy-2′-nitro-diphenylamin-4′-sulfonsäure, 3-Amino-2′-nitro-diphenylamin-4′-sulfonsäure, 4-Chlor-3-amino-4′-nitro-diphenylamin-2′-sulfonsäure, 4-Chlor-3-amino-2′-nitro-diphenylamin-4′-sulfonsäure, 3-Amino-4-methyl-4′-nitro-diphenylamin-2′-sulfonsäure, 3-Amino-4-methyl-2′-nitro-diphenylamin-4′-sulfonsäure, 3-Amino-4-methoxy-4′-nitro-diphenylamin-2′-sulfonsäure und 3-Amino-4-methoxy-2′-nitro-diphenylamin-4′-sulfonsäure.

Das erfindungsgemäße Verfahren verwendet bevorzugt als Ausgangsverbindungen Aminonitrodiphenylaminsulfonsäuren der allgemeinen Formel (1)

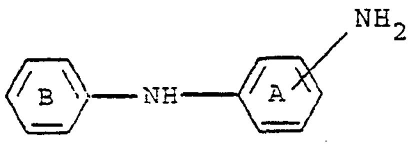

(1)

worin die im Benzolkern A befindliche Aminogruppe in meta- oder para-Stellung an den Benzolkern gebunden ist und der Benzolkern B durch eine oder zwei Nitrogruppen und eine Sulfogruppe substituiert ist, wobei diese Gruppen in ortho- und para-Stellung an den Kern B gebunden sind, und worin die Benzolkerne A und B noch jeweils einen oder zwei Substituenten enthalten können, die aus der Gruppe Halogen, wie Brom und insbesondere Chlor, Alkyl von 1 bis 4 C-Atomen, wie Äthyl und Methyl, Alkoxy von 1 bis 4 C-Atomen, wie Äthoxy und Methoxy, und Carboxy ausgewählt sind. Die Aminogruppe im Benzolkern A steht vorzugsweise in para-Stellung zur Aminogruppe des Diphenylamins.

Die erfindungsgemäß erhältlichen sauren Nitrofarbstoffe sind im warmen und kalten Wasser sehr gut löslich. Sie eignen sich zum Färben von Leder, insbesondere zum Färben von Chromleder der verschiedensten Herstellungsart, wie zwischengetrocknetem Chromleder, bspw. Chromspaltleder, frischem Chromleder, bspw. Boxcalf- oder Rindbox-Leder, oder gemischt chrom-vegetabil gegerbtem Leder, wie nachchromiertem vegetabil vorgegerbtem Schafleder. Auch zum Färben von aluminium- oder zirkongegerbten Ledern sind sie geeignet.

Die erfindungsgemäß erhältlichen Farbstoffe färben die Leder gut ein. Ihre Farbstärke ist im Vergleich zu anderen Nitrofarbstoffen hoch. Ihre Echtheiten, wie bspw. Lichtechtheit, Lickerechtheit, Lösungsmittelechtheit, sind gut.

Die Verwendung der Farbstoffe und die Herstellung der Färbungen mit Hilfe dieser Farbstoffe erfolgt in üblicher Weise. Zur Herstellung der Färbungen eignet sich besonders das Färben im Faß. Hierbei wird das Leder nach dem Entsäuern oder Aufwalken in einer Flotte bewegt, die den Farbstoff und gegebenenfalls eine geringe Menge einer schwachen Base, wie Ammoniak, und/oder ein anionisches Tensid enthält. Anschließend wird zur Weichstellung des Leders in üblicher Weise ein Licker zugegeben und nach dessen Einarbeitung das Bad schwach sauer gestellt, wozu üblicherweise Ameisensäure verwendet wird.

Es lassen sich jedoch auch Bürst- oder Spritzfärbungen herstellen, wofür beispielsweise eine Färbeflotte verwendet wird, die neben dem Farbstoff noch Ammoniak, wie etwa 25 %igem Ammoniak, ein anionaktives Tensid sowie etwa 10 % Äthanol enthält.

Die nachfolgenden Beispiele dienen zur Erläuterung der Erfindung. Die Teile sind Gewichtsteile und die Prozentangaben beziehen sich auf Gewichtsprozente, sofern nicht anders vermerkt.

### Beispiel 1

307 Teile 4'-Nitro-4-aminodiphenylamin-6'-sulfonsäure werden mit 2 500 Teilen Wasser von 50 °C verrührt. Durch Zugabe von ca. 125 Teilen einer 32 %igen wäßrigen Natronlauge wird die freie Säure in das Natriumsalz überführt und ein pH-Wert von 9,0 eingestellt. Sodann werden 75 Teile Kaliumpermanganat eingetragen. Durch die Reaktionswärme steigt die Temperatur rasch auf etwa 60 °C. Der pH-Wert beginnt anzusteigen ; er wird jedoch durch Zugabe von einigen Teilen Essigsäure bei einem Wert von 9 gehalten. Nach einer halben Stunde wird die Temperatur auf 80 °C erhöht und fünf Stunden lang dort belassen.

Zur Abtrennung von Unlöslichem wird der Ansatz über eine mit Kieselgur bedeckte Nutsche abgesaugt und Filtrat und Waschwasser werden in einem Sprühtrockner in ein Farbstoffpulver überführt. Dieses färbt Leder — auch frisches Chromnarbenleder — in einem vollen Mittelbraunton.

### Beispiel 2

307 Teile 4'-Nitro-4-amino-diphenylamin-6'-sulfonsäure werden mit 1 600 Teilen Wasser verrührt und durch Zugabe von 60,6 Teilen einer wäßrigen, 33 %igen Natronlauge zur Hälfte in das Natriumsalz überführt. Es stellt sich ein pH-Wert von 6 ein. Sodann werden 75 Teile Kaliumpermanganat innerhalb eines Zeitraums von 30 min eingetragen. Der pH-Wert steigt auf etwa 8 an. Die Temperatur wird auf 75 °C erhöht und sechs Stunden dort belassen. Die Aufarbeitung erfolgt wie in Beispiel 1. Das erhaltene Farbstoffpulver besitzt ähnlich gute färberische Eigenschaften wie das des Beispieles 1.

### Beispiel 3

Man arbeitet wie in Beispiel 2, gibt aber das Kaliumpermanganat im Form einer etwa 30 °C warmen etwa 8 %igen Lösung zu. Man erhält ein Farbstoffpulver, das ähnlich gute und vorteilhafte Färbeeigenschaften wie das des Beispieles 1 bzw. 2 besitzt.

Beispiel 4

Man arbeitet wie in Beispiel 1, gibt aber anstelle des Kaliumpermanganats 140 Teile Kaliummanganat zu. Man erhält ein Farbstoffpulver, das ähnlich gute Färbeeingenschaften wie das des Beispiels 1 besitzt.

Beispiel 5

Eine 60 °C warme Lösung von 343 Teilen des Natriumsalzes der 4'-Nitro-4-amino-3-methyl-diphenylamin-6'-sulfonsäure in 1 600 Teilen Wasser wird auf einen pH-Wert von 8,0 gebracht. Innerhalb von 10-15 min werden 80 Teile Kaliumpermanganat eingetragen. Die Temperatur steigt um ca. 20 °C an und wird nach dem Abklingen der Reaktionswärme zunächst gehalten, ebenso der pH-Wert durch Zugabe verdünnter Schwefelsäure bei 8,0. Wenn nach etwa 3 Stunden die Reaktion beendet ist, wird der Ansatz durch Absaugen über Kieselgur geklärt und das Filtrat sodann bei ca. 40 °C mittels Natriumchlorid in einer Menge von etwa 20 Vol.-%, bezogen auf das Volumen des Filtrats, ausgesalzen. Der ausgefallene Farbstoff wird abgesaugt, getrocknet und gemahlen. Er färbt Leder in leicht rotstichigen Mittelbrauntönen.

Beispiel 6

321 Teile 4'-Nitro-4-amino-3-methyl-diphenylamin-6'-sulfosäure werden mit 2 200 Teilen Wasser von 55 °C verrührt. 60,6 Teile einer 33 %igen wäßrigen Natronlauge werden zugegeben. Es stellt sich ein pH-Wert von 6 ein. 75 Teile Kaliumpermanganat werden eingetragen, wodurch die Temperatur um ca. 12 °C ansteigt und der pH-Wert sich auf 7,5 erhöht. Nach 30 min wird die Temperatur auf 90 °C gebracht und dort zwei Stunden gehalten. Der Ansatz wird abgekühlt, über Kieselgur geklärt und das Filtrat sprühgetrocknet.

Das erhaltene Farbstoffpulver färbt Leder ähnlich gut wie das nach Beispiel 5 erhältliche Farbstoffpulver.

Beispiel 7

Einen Farbstoff mit ähnlich guten Eingenschaften wie den des Beispiels 5 erhält man, wenn man wie im Beispiel 5 angegeben arbeitet, aber anstelle von 80 Teilen Kaliumpermanganat 140 Teile Kaliumpermanganat verwendet und den pH durch Zugabe von Essigsäure auf einen Wert von 9 hält.

Beispiel 8

Arbeitet man wie in Beispiel 1 angegeben, verwendet aber statt 4'-Nitro-4-aminodiphenylamin-6'-sulfonsäure die äquivalente Menge an 4'-Nitro-3-amino-4-methyl-diphenylamin-6'-sulfonsäure und die doppelte Menge Kaliumpermanganat, so erhält man einen Farbstoff, der Leder in einem kräftigen, sehr gelbstichigen hellen Braun färbt.

Beispiel 9

Man arbeitet wie in Beispiel 1, gibt aber nur soviel Natronlauge zu, daß sich ein pH-Wert von 5,5 einstellt, der während und nach dem Eintragen von Kaliumpermanganat durch Zutropfen von 25 %iger wäßriger Schwefelsäure gehalten wird.

Das erhaltene Farbstoffpulver färbt Leder in olivebraunen Tönen.

Anwendungsbeispiel 1

Zur Herstellung einer Färbung auf Boxcalf wird wie folgt verfahren :

10 Teile Kalbleder (Falzgewicht), das mit einem handelsüblichen Chromgerbstoff gegerbt wurde, wird im Faß in einem Bad aus 30 Teilen Wasser, 0,04 Teilen Natriumacetat und 0,04 Teilen Natriumhydrogencarbonat 30 min lang bewegt und entsäuert. Sodann wird es in ein frisches Bad eingebracht, das aus 30 Teilen Wasser und 0,05 Teilen eines erfindungsgemäßen sauren Nitrofarbstoffes besteht. Es wird darin 20 min bewegt, danach werden 0,2 Teile eines Öl-Lickergemisches zugegeben, nach weiteren 30 min 0,02 Teile 85 %ige wäßrige Ameisensäure. Nach 30 min wird das Leder herausgenommen, gespült, getrocknet und gestollt. — Die Temperatur der Bäder beträgt jeweils ca. 50 °C.

Anwendungsbeispiel 2

Zur Herstellung einer Färbung auf Spaltvelour arbeitet man wie folgt : 5 Teile trockenes geschliffenes Chromrindspaltleder werden zum Aufwalken 2 Stunden lang im Faß in einem Bad aus 50 Teilen Wasser, 0,05 Teilen 25 %igem wäßrigem Ammoniak und 0,04 Teilen Tributylphenyl-nonaglykoläther bewegt. Sodann wird es in ein frisches Bad aus 40 Teilen Wasser, 0,04 Teilen 25 %igem wäßrigem Ammoniak und

0,125 Teilen eines erfindungsgemäßen Farbstoffes eingebracht und darin 90 min lang bewegt. 0,1 Teile Licker werden zugegeben, nach 30 min 0,125 Teile 85 %ige wäßrige Ameisensäure. Das Leder wird nach 30 min herausgenommen, gespült, getrocknet und gestollt. — Die Badtemperatur beträgt jeweils ca. 50 °C.

Anwendungsbeispiel 3

Zur Herstellung einer Färbung auf vegetabil gegerbtem nachchromiertem Bekleidungsvelour wird wie folgt gearbeitet : 5 Teile eines derartigen Leders aus ostindischen Bastarden werden zum Aufwalken 90 min lang in einem Bad aus 50 Teilen Wasser, 0,05 Teilen 25 %igem wäßrigem Ammoniak und 0,05 Teilen eines Nonylphenolpolyglykoläthers (oder eines ähnlichen nichtionogenen Tensids) im Faß behandelt. Das Bad wird sodann abgelassen und durch ein neues ersetzt, das aus 40 Teilen Wasser und 0,25 Teilen eines erfindungsgemäßen Farbstoffes besteht. Das Leder wird darin 60 min bewegt, sodann werden dem Bad 0,125 Teile eines Lickers zugegeben und nach weiteren 30 min 0,25 Teile 85 %ige wäßrige Ameisensäure nachgesetzt. Nach 30 min wird das Leder herausgenommen, gespült, getrocknet und gestollt. — Die Badtemperatur beträgt jeweils ca. 50 °C.

Nach allen Anwendungsbeispielen werden mit den erfindungsgemäß(en) (erhältlichen) sauren Nitrofarbstoffen kräftige braune Färbungen mit guten Echtheiten erhalten.

**Patentansprüche**

1. Verfahren zur Herstellung von sauren Nitrofarbstoffen durch Behandlung von Aminonitrodiphenylaminsulfonsäuren mit einem Oxidationsmittel in wäßrigem Medium, dadurch gekennzeichnet, daß man als Oxidationsmittel eine Mangan-(VI)- oder Mangan-(VII)-Verbindung einsetzt und die Umsetzung bei einem pH-Wert von oberhalb 5 und bei einer Temperatur zwischen 20 und 100 °C durchführt.

2. Verfahren nach Anspruch 1, dadurch gekennzeichnet, daß man die Umsetzung bei einem pH-Wert zwischen 6,5 und 10,5 durchführt.

3. Verfahren nach Anspruch 1 oder 2, dadurch gekennzeichnet, daß man die Mangan-(VI)- oder Mangan-(VII)-Verbindung in einer Menge von 0,2 bis 2 Mol pro Mol Aminonitrodiphenylaminsulfonsäure einsetzt.

4. Verfahren nach Anspruch 1, 2 oder 3, dadurch gekennzeichnet, daß die Ausgangs-Aminonitrodiphenylaminsulfonsäuren Verbindungen der allgemeinen Formel (1)

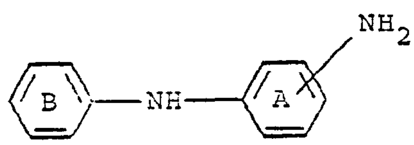

(1)

worin die im Benzolkern A befindliche Aminogruppe in meta- oder para-Stellung an den Benzolkern gebunden ist und der Benzolkern B durch eine oder zwei Nitrogruppen und eine Sulfogruppe substituiert ist, wobei diese Gruppen in ortho- und para-Stellung an den Kern B gebunden sind, und worin die Benzolkerne A und B noch jeweils einen oder zwei Substituenten enthalten können, die aus der Gruppe Halogen, wie Brom und insbesondere Chlor, Alkyl von 1 bis 4 C-Atomen, wie Äthyl und Methyl, Alkoxy von 1 bis 4 C-Atomen, wie Äthoxy und Methoxy, und Carboxy ausgewählt sind, darstellen.

5. Verfahren nach einem der Ansprüche 1 bis 3, dadurch gekennzeichnet, daß die Ausgangs-Aminonitrodiphenylaminsulfonsäure die 4-Amino-4'-nitrodiphenylamin-2'-sulfonsäure, 4-Amino-2'-nitrodiphenylamin-4'-sulfonsäure, 4-Amino-2',4'-dinitrodiphenylamin-6'-sulfonsäure, 4-Amino-2',6'-dinitrodiphenylamin-4'-sulfonsäure, 3-Amino-4'-nitrodiphenylamin-2'-sulfonsäure, 5-Chlor-4-amino-4'-nitro-diphenylamin-2'-sulfonsäure, 5-Chlor-4-amino-2'-nitro-diphenylamin-4'-sulfonsäure, 4-Amino-3-methyl-4'-nitro-diphenylamin-2'-sulfonsäure, 4-Amino-3-methyl-2'-nitro-diphenylamin-4'-sulfonsäure, 4-Amino-3-methoxy-4'-nitro-diphenylamin-2'-sulfonsäure, 4-Amino-3-methoxy-2'-nitro-diphenylamin-4'-sulfonsäure, 3-Amino-2'-nitro-diphenylamin-4'-sulfonsäure, 4-Chlor-3-amino-4'-nitro-diphenylamin-2'-sulfonsäure, 4-Chlor-3-amino-2'-nitro-diphenylamin-4'-sulfonsäure, 3-Amino-4-methyl-4'-nitro-diphenylamin-2'-sulfonsäure, 3-Amino-4-methyl-2'-nitro-diphenylamin-4'-sulfonsäure, 3-Amino-4-methoxy-4'-nitro-diphenylamin-2'-sulfonsäure oder 3-Amino-4-methoxy-2'-nitro-diphenylamin-4'-sulfonsäure oder ein Gemisch von solchen Verbindungen ist.

6. Verfahren nach einem der Ansprüche 1 bis 3, dadurch gekennzeichnet, daß die Ausgangs-Aminonitrodiphenylaminsulfonsäure die 4-Amino-4'-nitrodiphenylamin-2'-sulfonsäure, 4-Amino-2'-nitrodiphenylamin-4'-sulfonsäure, 4-Amino-2',4'-dinitrodiphenylamin-6'-sulfonsäure, 4-Amino-2',6'-dinitrodiphenylamin-4'-sulfonsäure oder 3-Amino-4'-nitrodiphenylamin-2'-sulfonsäure oder ein Gemisch von solchen Verbindungen ist.

7. Verfahren nach einem der Ansprüche 1 bis 6, dadurch gekennzeichnet, daß die Ausgangs-Aminonitrodiphenylaminsulfonsäure eine 4-Amino-(nitrodiphenylaminsulfonsäure) ist.

8. Verfahren nach einem der Ansprüche 1 bis 7, dadurch gekennzeichnet, daß das verwendete Oxidationsmittel Kaliumpermanganat ist.

9. Verwendung der nach einem der Ansprüche 1 bis 8 erhältlichen sauren Nitrofarbstoffe zum Färben von Leder.

10. Verwendung nach Anspruch 9, dadurch gekennzeichnet, daß das Leder ein frisches Chromleder ist.

**Claims**

1. Process for the preparation of acid nitro dyestuffs by treating aminonitrodiphenylaminesulfonic acids with an oxidizing agent in an aqueous medium, characterized by that the oxidizing agent employed is a manganese-(VI) or manganese-(VII) compound and the reaction is carried out at a pH higher than 5 and at a temperature between 20 and 100 °C.

2. The process according to claim 1, characterized by that the reaction is carried out at a pH between 6.5 and 10.5.

3. The process according to claim 1 or 2, characterized by that the manganese-(VI) or manganese-(VII) compound is employed in an amount of 0.2 to 2 moles per mole of aminonitrodiphenylaminesulfonic acid.

4. The process according to claim 1, 2 or 3, characterized by that the starting aminonitrodiphenylaminesulfonic acids are compounds of the general formula (1)

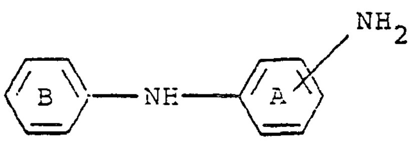

(1)

in which the amino group present in the benzene nucleus A is attached to the benzene nucleus in the metaposition or para-position, and the benzene nucleus B is substituted by one or two nitro groups and one sulfo group, these groups being attached to the nucleus B in the ortho-position and para-position, and the benzene nuclei A and B can each additionally contain one or two substituents selected from the group consisting of halogen, alkyl of 1 to 4 C-atoms, such as ethyl and methyl, alkoxy of 1 to 4 C-atoms, such as ethoxy and methoxy, and carboxy.

5. The process according to any one of claims 1 to 3, characterized by that the starting aminonitrodiphenylaminesulfonic acid is 4-amino-4'-nitrodiphenylamine-2'-sulfonic acid, 4-amino-2'-nitrodiphenylamine-4'-sulfonic acid, 4-amino-2',4'-dinitrodiphenylamine-6'-sulfonic acid, 4-amino-2',6'-dinitrodiphenylamine-4'-sulfonic acid, 3-amino-4'-nitrodiphenylamine-2'-sulfonic acid, 5-chloro-4-amino-4'-nitrodiphenylamine-2'-sulfonic acid, 5-chloro-4-amino-2'-nitrodiphenylamine-4'-sulfonic acid, 4-amino-3-methyl-4'-nitrodiphenylamine-2'-sulfonic acid, 4-amino-3-methyl-2'-nitrodiphenylamine-4'-sulfonic acid, 4-amino-3-methoxy-4'-nitrodiphenylamine-2'-sulfonic acid, 4-amino-3-methoxy-2'-nitrodiphenylamine-4'-sulfonic acid, 3-amino-2'-nitro-diphenylamine-4'-sulfonic acid, 4-chloro-3-amino-4'-nitrodiphenylamine-2'-sulfonic acid, 4-chloro-3-amino-2'-nitrodiphenylamine-4'-sulfonic acid, 3-amino-4-methyl-4'-nitrodiphenylamine-2'-sulfonic acid, 3-amino-4-methyl-2'-nitrodiphenylamine-4'-sulfonic acid, 3-amino-4-methoxy-4'-nitrodiphenylamine-2'-sulfonic acid or 3-amino-4-methoxy-2'-nitrodiphenylamine-4'-sulfonic acid or a mixture of such compounds.

6. The process according to any one of claim 1 to 3, characterized by that the starting aminonitrodiphenylaminesulfonic acid is 4-amino-4'-nitrodiphenylamine-2'-sulfonic acid, 4-amino-2'-nitrodiphenylamine-4'-sulfonic acid, 4-amino-2',4'-dinitrodiphenylamine-6'-sulfonic acid, 4-amino-2',6'-dinitrodiphenylamine-4'-sulfonic acid or 3-amino-4'-nitrodiphenylamine-2'-sulfonic acid or a mixture of such compounds.

7. The process according to any one of claims 1 to 6, characterized by that the starting aminonitrodiphenylaminesulfonic acid is a 4-amino-(nitrodiphenylaminesulfonic acid).

8. The process according to any one of claims 1 to 7, characterized by that the oxidizing agent used is potassium permanganate.

9. Use of the acid nitro dyestuffs obtainable according to any one of claims 1 to 8, for the dyeing of leather.

10. Use according to claim 9, characterized by that the leather is fresh chrome leather.

**Revendications**

1. Procédé de préparation de colorants nitrés acides par traitement d'acides amino-nitro-diphénylamine-sulfoniques avec un agent d'oxydation, en milieu aqueux, procédé caractérisé en ce qu'on utilise, comme agent d'oxydation, un composé du manganèse (VI) ou du manganèse (VII) et en ce qu'on effectue la réaction à un pH supérieur à 5 et à une température comprise entre 20 et 100 °C.

2. Procédé selon la revendication 1, caractérisé en ce qu'on effectue la réaction à un pH compris entre 6,5 et 10,5.

3. Procédé selon l'une des revendications 1 et 2, caractérisé en ce que le composé du manganèse (VI) ou du manganèse (VII) est mis en jeu en une quantité de 0,2 à 2 mol par mole d'acide amino-nitro-diphénylamine-sulfonique.

4. Procédé selon l'une quelconque des revendications 1, 2 et 3, caractérisé en ce que les acides amino-nitro-diphénylamine-sulfoniques qui servent de corps de départ sont des composés répondant à la formule générale 1 :

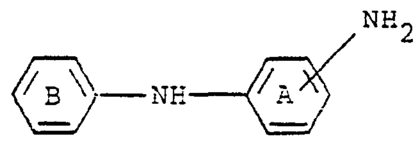

(1)

dans laquelle le radical amino porté par le noyau benzénique A est fixé en méta ou en para sur ledit noyau benzénique, le noyau benzénique B porte un ou deux radicaux nitro et un radical sulfo, lesquels sont en ortho et en para sur ledit noyau B, et les noyaux benzéniques A et B peuvent en outre porter chacun un ou deux substituants supplémentaires pris dans l'ensemble constitué par les halogènes, tels que le brome et, plus spécialement, le chlore, les alkyles en $C_1$-$C_4$, tels que les radicaux éthyle et méthyle, les alcoxy en $C_1$-$C_4$, tels que les radicaux éthoxy et méthoxy, et le radical carboxy.

5. Procédé selon l'une quelconque des revendications 1 à 3, caractérisé en ce qu'on utilise, comme acide amino-nitro-diphénylamine-sulfonique de départ, l'un des composés suivants :
l'acide amino-4 nitro-4' diphénylamine-sulfonique-2', l'acide amino-4 nitro-2' diphénylamine-sulfonique-4', l'acide amino-4 dinitro-2',4' diphénylamine-sulfonique-6', l'acide amino-4 dinitro-2',6' diphénylamine-sulfonique-4', l'acide amino-3 nitro-4' diphénylamine-sulfonique-2', l'acide chloro-5 amino-4 nitro-4' diphénylamine-sulfonique-2', l'acide chloro-5 amino-4 nitro-2' diphénylamine-sulfonique-4', l'acide amino-4 méthyl-3 nitro-4' diphénylamine-sulfonique-2', l'acide amino-4 méthyl-3 nitro-2' diphénylamine-sulfonique-4', l'acide amino-4 méthoxy-3 nitro-4' diphénylamine-sulfonique-2', l'acide amino-4 méthoxy-3 nitro-2' diphénylamine-sulfonique-4', l'acide amino-3 nitro-2' diphénylamine-sulfonique-4', l'acide chloro-4 amino-3 nitro-4' diphénylamine-sulfonique-2', l'acide chloro-4 amino-3 nitro-2' diphénylamine-sulfonique-4', l'acide amino-3 méthyl-4 nitro-4' diphénylamine-sulfonique-2', l'acide amino-3 méthyl-4 nitro-2' diphénylamine-sulfonique-4', l'acide amino-3 méthoxy-4 nitro-4' diphénylamine-sulfonique-2', ou l'acide amino-3 méthoxy-4 nitro-2' diphénylamine-sulfonique-4', ou un mélange de composés de ce genre.

6. Procédé selon l'une quelconque des revendications 1 à 3, caractérisé en ce qu'on utilise, comme acide amino-nitro-diphénylamine-sulfonique de départ, l'acide amino-4 nitro-4' diphénylamine-sulfonique-2', l'acide amino-4 nitro-2' diphénylamine-sulfonique-4', l'acide amino-4 dinitro-2',4' diphénylamine-sulfonique-6', l'acide amino-4 dinitro-2',6' diphénylamine-sulfonique-4' ou l'acide amino-3 nitro-4' diphénylamine-sulfonique-2', ou un mélange de composés de ce genre.

7. Procédé selon l'une quelconque des revendications 1 à 6, caractérisé en ce que l'acide amino-nitro-diphénylamine-sulfonique dont on part est un acide amino-4 (nitro-diphénylamine-sulfonique).

8. Procédé selon l'une quelconque des revendications 1 à 7, caractérisé en ce que l'agent d'oxydation utilisé est le permanganate de potassium.

9. Application des colorants nitrés acides qui ont été obtenus selon l'une quelconque des revendications 1 à 8 pour la teinture du cuir.

10. Application selon la revendication 9, caractérisée en ce que le cuir est un cuir au chrome frais.